# EUROPÄISCHE PATENTSCHRIFT

(11) **EP 1 412 125 B1**
(45) Veröffentlichungstag und Bekanntmachung des Hinweises auf die Patenterteilung: **21.09.2005**
(21) Anmeldenummer: 02767242.7
(22) Anmeldetag: 22.07.2002
(51) Int. Cl.: B23K 9/20, B23K 11/00, B23K 9/095

(54) **VERFAHREN ZUM KURZZEIT-LICHTBOGENSCHWEISSEN SOWIE KURZZEIT-LICHTBOGENSCHWEISSSYSTEM, UM HOCHFREQUENTE STÖRUNGEN ZU ERKENNEN**
SHORT-TIME ARC WELDING METHOD AND SHORT-TIME ARC WELDING SYSTEM FOR IDENTIFYING HIGH-FREQUENCY DISTURBANCES
PROCEDE DE SOUDAGE A L'ARC DE COURTE DUREE ET SYSTEME DE SOUDAGE A L'ARC DE COURTE DUREE, PERMETTANT DE DETECTER DES DEFAUTS DE HAUTE FREQUENCE

(30) Priorität: 23.07.2001 DE 10136992
(43) Veröffentlichungstag der Anmeldung: 28.04.2004
(73) Patentinhaber: Newfrey LLC, Delaware 19711 (US)
(72) Erfinder: SCHMIDT, Wolfgang, D-35447 Reiskirchen (DE); SCHMITT, Klaus, Gisbert, D-35390 Giessen (DE)
(74) Vertreter: Haar, Lucas Heinz Jörn
(86) Internationale Anmeldenummer: PCT/EP2002/008149
(87) Internationale Veröffentlichungsnummer: WO 2003/011511

(56) Entgegenhaltungen:
- US-A- 5 434 382
- US-A- 5 449 877
- US-A- 5 662 820
- US-A- 5 676 867
- US-A- 5 977 506

## Beschreibung

Die vorliegende Erfindung betrifft ein Verfahren zum Kurzzeit-Lichtbogenschweißen, insbesondere zum Bolzenschweißen gemäß dem Oberbegriff des Anspruchs 1 (siehe, z.B., US-A-5 676 867).

Ferner betrifft die vorliegende Erfindung ein Kurzzeit-Lichtbogenschweißsystem zum Schweißen von Elementen wie z.B. Metallbolzen, auf Bauteile, wie z.B. Metallbleche gemäß dem Oberbegriff des Anspruchs 13 (siehe, z.B., US-A-5 676 867).

Ein derartiges Verfahren zum Kurzzeit-Lichtbogenschweißen bzw. ein solches Kurzzeit-Lichtbogenschweißsystem sind allgemein bekannt. Das Kurzzeit-Lichtbogenschweißen wird häufig als Bolzenschweißen bezeichnet, obgleich nicht ausschließlich Bolzen geschweißt werden.

Ein aktuelles System zum Bolzenschweißen im industriellen Einsatz ist bekannt aus der Broschüre "Neue TUCKER-Technologie. Bolzenschweißen mit System!", Emhart TUCKER, 9/99.

Das Bolzenschweißen findet hauptsächlich, jedoch nicht ausschließlich in der Fahrzeugtechnik Anwendung. Dabei werden Metallelemente wie Metallbolzen mit und ohne Gewinde, Ösen, Muttern etc. auf das Blech der Fahrzeugkarosserie aufgeschweißt. Die Metallelemente dienen dann als Anker bzw. Befestigungselemente, um beispielsweise Innenraumausstattungen festzulegen.

Bei dem obengenannten Bolzenschweißen gemäß TUCKER wird zunächst ein Element in einen Schweißkopf eingesetzt. Dies kann durch eine automatische Zuführeinrichtung, beispielsweise mittels Druckluft, erfolgen. Der Schweißkopf positioniert nun das Element an der geeigneten Stelle an dem Bauteil. Als nächstes wird ein Vorschweißstrom eingeschaltet, der durch den Bolzen und das Bauteil hindurch fließt. Dann wird das Element gegenüber dem Bauteil angehoben. Es bildet sich ein Lichtbogen. Der Lichtbogenstrom ist so gewählt, daß zunächst Verunreinigungen, Oberflächenbeschichtungen, Zink, Trockenschmierstoffe, Öle etc. abgebrannt bzw. verdampft werden. Anschließend wird auf den Schweißstrom umgeschaltet. Durch den hohen Schweißstrom schmelzen die einander gegenüberliegenden Stirnseiten von Element und Bauteil an. Anschließend wird das Element wieder auf das Bauteil abgesenkt, so daß sich die wechselseitigen Schmelzen vermischen. Mit dem Erreichen des Bauelementes und dem Kurzschluß des Lichtbogens wird der Schweißstrom abgeschaltet. Die Schmelze erstarrt, die Schweißverbindung ist erfolgt.

Insbesondere im industriellen Einsatz ist es üblich, einen oder mehrere Schweißparameter zu überwachen. Gerade in der Fahrzeugindustrie, mit der dortigen hohen Produktivität und den hohen Stückzahlen ist eine möglichst einhundertprozentige Qualitätskontrolle nahezu unerläßlich. Die bei einer Schweißverbindung erzielte Qualität läßt sich durch eine visuelle Inspektion der Schweißverbindung in der Regel jedoch nicht hinreichend sicher erkennen. Daher ist es üblich, wenigstens einen Schweißparameter, z.B. die Lichtbogenspannung, während wenigstens eines zeitlichen Abschnittes des Schweißvorganges abzutasten, um Störungen zu erkennen.

Gerade die Lichtbogenspannung ist für die letztlich erzielte Schweißverbindungsqualität ein wichtiger Parameter. Auch die Synchronisierung der Lichtbogenspannung mit der Hubbewegung des Metallelementes ist ein wichtiges Entscheidungskriterium für die Beurteilung der Schweißqualität.

Im Stand der Technik ist es üblich, Lichtbogenspannung, Hubbewegung des Elementes und/oder Schweißstrom unmittelbar mit einer oberen bzw. einer unteren Toleranzschwelle zu vergleichen, um den Schweißvorgang zu bewerten.

Es hat sich jedoch gezeigt, daß die oben beschriebene Überwachung von Schweißparametern nicht immer hinreichend ist, um eine gute Übereinstimmung zwischen der Bewertung des jeweiligen Schweißprozesses und dem tatsächlich erzielten Schweißergebnis zu erlangen.

Vor diesem Hintergrund ist es die Aufgabe der vorliegenden Erfindung, ein Verfahren zum Kurzzeit-Lichtbogenschweißen bzw. ein Kurzzeit-Lichtbogenschweißsystem anzugeben, bei denen eine Überwachung von Schweißparametern mit noch größerer Sicherheit erkennen läßt, ob die Qualität des jeweiligen Schweißvorganges zufriedenstellend war oder nicht.

Diese Aufgabe wird bei dem eingangs genannten Verfahren zum Kurzzeit-Lichtbogenschweißen dadurch gelöst, daß die aus dem Abtastvorgang ermittelte Meßkurve geglättet und anschließend wenigstens eine Toleranzkurve erzeugt wird, die einen vorab einstellbaren Abstand von der geglätteten Meßkurve aufweist, und daß anschließend die ungeglättete Meßkurve mit der Toleranzkurve verglichen wird, um hochfrequente Störungen zu erkennen.

Bei dem eingangs genannten Kurzzeit-Lichtbogenschweißsystem wird diese Aufgabe dadurch gelöst, daß die Auswerteeinrichtung dazu ausgelegt ist, eine aus den abgetasteten Meßwerten des Schweißparameters ermittelte Meßkurve zu glätten und anschließend wenigstens eine Toleranzkurze zu erzeugen, die einen vorab einstellbaren Abstand von der geglätteten Meßkurve aufweist, und dazu ausgelegt ist, die ungeglättete Meßkurve anschließend mit der Toleranzkurve zu vergleichen, um hochfrequente Störungen zu erkennen.

Durch das erfindungsgemäße Lichtbogenschweißverfahren bzw. -system läßt sich die Schweißparameterüberwachung optimieren, um die Schweißqualität der Kurzzeit-Lichtbogenschweißverbindungen zu erhöhen.

Es wurde herausgefunden, daß insbesondere beim Schweißen von Aluminiumbolzen die folgenden Probleme auftreten können. Aufgrund der geringen Viskosität der Aluminiumschmelze kann es gelegentlich zu einem Abtropfen von dem Metallelement auf das Metallbauteil kommen. Ferner kann es vorkommen, daß eine Schutzgasummantelung des Lichtbogens aufgrund äußerer Umstände gestört wird. Dies führt dazu, daß dem Lichtbogen Sauerstoff über die Luft zugeführt wird.

Diese Störungen wirken sich auf die Lichtbogenspannung aus. Ein Abtropfen von Aluminiumschmelze führt zu einem kurzzeitigen Abfall der Lichtbogenspannung (Drop). Ein Einbruch der Schutzgasummantelung führt zu einem kurzzeitigen Anstieg der Lichtbogenspannung (Peak).

Derartige hochfrequente Störungen konnten mit bisherigen Überwachungsansätzen der Schweißparameter nicht erkannt werden.

Durch das erfindungsgemäße Verfahren bzw. System ist es möglich, diese hochfrequenten Störungen der Lichtbogenspannung zu erkennen. Folglich können geeignete Maßnahmen getroffen werden, beispielsweise Abgabe eines Alarmes, Inkrementierung eines Fehlerzählers etc.

Aufgrund der Tatsache, daß die Toleranzkurven auf der geglätteten Meßkurve beruhen, werden niederfrequente Änderungen der Lichtbogenspannung nicht als Störungen gewertet. Derartige niederfrequente Veränderungen der Lichtbogenspannung können beispielsweise im Verlauf von Regelvorgängen an der Lichtbogenspannung auftreten und sollen im vorliegenden Zusammenhang folglich nicht als Störungen bewertet werden.

Im folgenden wird zur Beschreibung der Erfindung generell auf die Lichtbogenspannung als Schweißparameter Bezug genommen. Die Lichtbogenspannung ist, wie oben erwähnt, ein für die Qualität des Schweißvorganges besonders relevanter Parameter. Es versteht sich jedoch, daß sämtliche Bezugnahmen auf die Lichtbogenspannung auch alternativ und/oder akkumulativ als Bezugnahmen auf andere Schweißparameter wie den Schweißstrom, den Bolzenweg etc. zu verstehen sind.

Der Abschnitt, während dessen der Schweißparameter abgetastet wird, kann entweder die gesamte Zeitspanne des Schweißvorganges abdecken oder nur einen Teil hiervon. Beispielsweise kann der Abtastabschnitt erst mit dem Erreichen einer bestimmten Hubhöhe beginnen, und vor dem vollständigen Absenken des Elementes auf das Bauteil beendet werden.

Die Aufgabe wird folglich vollkommen gelöst.

In einer bevorzugten Ausführungsform wird die Toleranzkurve oberhalb der geglätteten Meßkurve angeordnet, um hochfrequente Störungen zu erkennen, die gegenüber der geglätteten Meßkurve nach oben hin ausreißen (Peaks).

In einer weiteren Ausführungsform, die alternativ oder akkumulativ hierzu Anwendung finden kann, ist die Toleranzkurve unterhalb der geglätteten Meßkurve angeordnet, um hochfrequente Störungen zu erkennen, die gegenüber der geglätteten Meßkurve nach unten hin ausreißen (Drops).

Durch die Möglichkeit, Peaks zu erkennen, lassen sich insbesondere beim Schweißen von Aluminiumbolzen kurzzeitige Störungen der Schutzgasummantelung des Lichtbogens erfassen.

Durch die Möglichkeit, Drops zu erkennen, lassen sich insbesondere beim Aluminiumschweißen Tropfenübergänge im Lichtbogen aufgrund abtropfender Schmelze erfassen.

Beide Arten von Störungen können zu Schweißergebnissen führen, die von der Qualität her nicht hinreichend sind. Folglich kann aufgrund der Erkennung der Peaks bzw. Drops ein Fehlersignal abgegeben werden. Auf dieser Grundlage können dann entweder Nachbearbeitungen erfolgen, oder Schweißvorgang kann vollständig wiederholt werden.

Insgesamt ist es auch von Vorzug, wenn der Abstand zwischen Toleranzkurve und geglätteter Meßkurve über den Abtastabschnitt konstant ist.

Zwar ist es generell auch denkbar, den Abstand über der Zeit zu variieren, ein konstanter Abstand ist jedoch zur Fehlererkennung ausreichend und ist zudem vergleichsweise leicht software-technisch zu programmieren.

Gemäß einer weiteren bevorzugten Ausführungsform werden nach dem Glätten der Meßkurve wenigstens zwei Toleranzkurven erzeugt, die in derselben Richtung zwei unterschiedliche Abstände gegenüber der geglätteten Meßkurve aufweisen, und die ungeglättete Meßkurve wird anschließend mit den zwei Toleranzkurven verglichen, um weniger starke und starke hochfrequente Störungen zu erkennen.

Durch das Bereitstellen von zwei Toleranzkurven ist es möglich, zwischen starken und weniger starken hochfrequenten Schwankungen des Schweißparameters zu unterscheiden. Dies kann beispielsweise dazu genutzt werden, um bei Erkennung von starken hochfrequenten Störungen ein sofortiges Fehlersignal abzugeben. Falls eine erkannte Störung hingegen weniger stark ist, also die nähere Toleranzkurve überschreitet, die weiter entfernt liegende Toleranzkurve jedoch nicht, kann beispielsweise ein Störungszähler inkrementiert werden. Erst bei Überschreiten einer bestimmten Anzahl derartiger weniger starker Störungen wird dann ein Fehlersignal abgegeben.

Ferner ist es von Vorzug, wenn der Schweißparameter diskret abgetastet wird.

Diskrete Meßwerte lassen sich in einer digitalen Signalverarbeitung besonders günstig verarbeiten.

Insofern ist es dabei ebenfalls von Vorzug, wenn die Glättung der Meßkurve durch eine digitale Tiefpaß-Filterung der aus diskreten Meßpunkten bestehenden Meßkurve erfolgt.

Eine digitale Tiefpaß-Filterung läßt sich beispielsweise in einem digitalen Signalprozessor in Form eines FIR-Filters realisieren.

Insgesamt ist es von Vorzug, wenn die Abtastperiode im Bereich zwischen 100 µs und 1000 µs, insbesondere im Bereich zwischen 200 µs und 500 µs liegt.

Es hat sich gezeigt, daß eine derartige Abtastperiode zum Erfassen von hochfrequenten Störungen, wie sie in Form von Peaks und Drops auftreten können, mehr als hinreichend ist.

Von besonderem Vorzug ist es ferner, wenn die Tiefpaß-Filterung mit einer Grenzfrequenz im Bereich zwischen 20 Hz und 400 Hz, insbesondere im Bereich zwischen 50 Hz und 250 Hz erfolgt.

Insgesamt ist es von Vorzug, wenn die Häufigkeit des Auftretens von hochfrequenten Störungen erfaßt wird.

Auf diese Weise ist es möglich, die Tendenz des Auftretens von hochfrequenten Störungen wie Peaks oder Drops zu erfassen. So kann es beispielsweise mit fortschreitender Betriebsdauer des Schweißsystems zu dauerhaften Veränderungen der Schweißbedingungen kommen. Dies kann ggf. durch Erfassen der Häufigkeit des Auftretens von hochfrequenten Störungen erfaßt werden.

Bei einer weiteren bevorzugten Ausführungsform wird der zur Erzeugung des Lichtbogens verwendete elektrische Strom während des Abtastabschnittes auf einen konstanten Wert geregelt und die Lichtbogenspannung wird über die Zeit aufintegriert, um ein Maß für die Energie zu erhalten, die in die Schweißverbindung eingetragen wird.

Diese Ausführungsform wird unabhängig von der erfindungsgemäßen Möglichkeit, hochfrequente Störungen zu erkennen durch Meßkurvenglättung, Toleranzkurvenerzeugung und Kurvenvergleich als eigene Erfindung angesehen.

Es hat sich nämlich gezeigt, daß die in die Schweißverbindung eingetragene Energie ebenfalls ein wichtiger Parameter zur Bewertung der Qualität der Schweißverbindung ist. Die Energie läßt sich vergleichsweise einfach errechnen, indem die Lichtbogenspannung aufintegriert wird. Da der Schweißstrom aufgrund der Regelung konstant bleibt, ist das Integral der Lichtbogenspannung direkt proportional zur eingetragenen Energie.

Dabei ist es besonders bevorzugt, wenn die durch Integrieren der Lichtbogenspannung ermittelte Energie mit einem oberen und/oder einem unteren Schwellenwert verglichen wird, um die Qualität der Schweißverbindung abzuschätzen.

Falls der Energieeintrag unter dem unteren Schwellenwert liegt, ist möglicherweise nicht hinreichend Material angeschmolzen worden, um eine gute Schweißverbindungsqualität zu erzielen. Wenn die eingetragene Energiemenge hingegen den oberen Schwellenwert überschreitet, ist vermutlich zu viel Energie eingetragen worden, so daß die Gefahr besteht, daß das Bauteil und/oder das Bauelement Schaden genommen hat. Dies ist insbesondere bei dem Aufschweißen von Bolzen auf sehr dünne Karosseriebleche ein wichtiges Entscheidungskriterium zur Beurteilung der Schweißverbindungsqualität.

Bei dem erfindungsgemäßen Kurzzeit-Lichtbogenschweißsystem ist es von besonderem Vorteil, wenn die Leistungsversorgungseinrichtung eine Konstantstromquelle ist.

Bei dieser Ausführungsform läßt sich für die Frage der Überwachung und Auswertung von Meßergebnissen davon ausgehen, daß der Schweißstrom konstant ist. Folglich ist es möglich, sich bei der Überwachung auf andere Schweißparameter wie insbesondere die Lichtbogenspannung zu konzentrieren, um die Schweißverbindungsqualität beurteilen zu können.

Die Überwachung und Auswertung des Schweißvorganges erfolgt in der Regel so, daß zunächst der oder die Schweißparameter über den ganzen Abtastabschnitt abgetastet werden. Anschließend erfolgt anhand der abgetasteten und abgespeicherten Meßkurve eine Beurteilung des nunmehr bereits erfolgten Schweißvorganges.

Lediglich in einer üblichen Vorstromphase, in der ein Lichtbogen gezogen wird, ist es auch möglich, zusätzlich eine Echtzeitüberwachung durchzuführen und den Schweißvorgang noch vor Einschalten des eigentlichen Schweißstroms abzubrechen, falls ein Fehler auftritt, den das System nicht selbst kompensieren kann.

Denn durch den Vorstrom werden Element und Bauteil noch nicht angeschmolzen, so daß es noch möglich ist, den Schweißvorgang abzubrechen und an der gleichen Stelle zu wiederholen, falls notwendig.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen Kurzzeit-Lichtbogenschweißsystems;
- Fig. 2: ein Diagramm von Lichtbogenspannung über der Zeit zur Erläuterung des erfindungsgemäßen Verfahrens zum Kurzzeit-Lichtbogenschweißen;
- Fig. 3: eine der Fig. 2 ähnliche Ansicht einer weiteren Ausführungsform des erfindungsgemäßen Verfahrens zum Kurzzeit-Lichtbogenschweißen; und
- Fig. 4: ein Diagramm der in eine Schweißverbindung eingetragenen Energie über der Zeit zur Darstellung eines weiteren Aspektes der vorliegenden Erfindung.

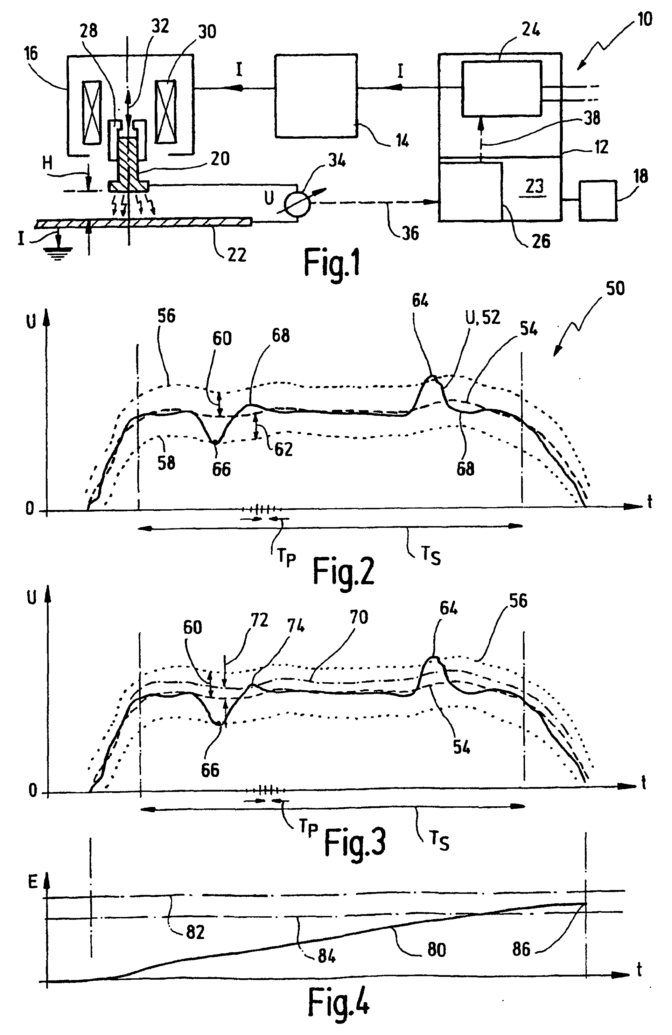

In Fig. 1 ist ein erfindungsgemäßes Kurzzeit-Lichtbogenschweißsystem generell mit 10 bezeichnet. Das Schweißsystem 10 weist eine Steuer- und Energieeinheit 12 auf. An die Steuer- und Energieeinheit 12 können eine Mehrzahl von Zuführeinheiten 14 angeschlossen werden, von denen eine in Fig. 1 dargestellt ist.

An jede Zuführeinheit 14 sind ein oder zwei Schweißköpfe 16 angeschlossen, in der Darstellung der Fig. 1 ein einzelner Schweißkopf 16.

An der Steuer- und Energieeinheit 12 ist ferner eine Benutzerschnittstelle 18 vorgesehen, über die ein Anwender das Schweißsystem 10 konfigurieren kann. Ferner können auf einer Anzeige der Benutzerschnittstelle 18 Systemdaten, Alarme etc. angezeigt werden.

Das Schweißsystem 10 dient dazu, Metallelemente wie Metallbolzen 20 auf Metallbauteile wie Metallbleche 22 zu schweißen. Ein typisches Anwendungsgebiet ist die Fahrzeugtechnik. Hier dient das Schweißsystem 10, oder eine Mehrzahl derartiger Schweißsysteme 10 dazu, Verbindungselemente wie Metallbolzen mit und ohne Gewinde, Ösen, Muttern etc. an Fahrzeugkarosserieteile aufzuschweißen. Die Verbindungselemente dienen als Anker zum Befestigen beispielsweise von Innenraumausstattungen des Kraftfahrzeuges.

Die Steuer- und Energieeinheit 12 beinhaltet eine Steuereinrichtung 23 und eine Leistungsversorgungseinrichtung 24. Die Steuereinrichtung 23 wiederum beinhaltet eine Auswerteeinrichtung 26.

Die Steuereinrichtung 23 dient generell zur Steuerung des Schweißsystems 10. Sie ist unmittelbar verbunden mit der Benutzerschnittstelle 18, so daß verschiedene Schweißparameter, Grundprogramme zur Steuerung von Schweißabläufen etc. geladen werden können.

Die Leistungsversorgungseinrichtung 24 ist als Konstantstromquelle ausgebildet. Sie liefert einen geregelten konstanten Strom I, der über die Zuführeinheit 14 dem Schweißkopf 16 zugeführt wird. Der Schweißstrom I fließt dann durch das Metallelement 20 und das Metallbauteil 22.

Der Schweißkopf 16 weist einen Halter 28 auf, an dem jeweils ein aufzuschweißendes Metallelement 20 gehalten ist. Ferner beinhaltet der Schweißkopf 16 einen elektrischen Linearmotor 30, mittels dessen der Halter 28 samt dem Metallelement 20 angehoben und abgesenkt werden kann, wie es schematisch bei 32 gezeigt ist.

Anstelle eines elektrischen Linearmotors 30 kann der Schweißkopf auch eine Kombination aus einem Elektromagneten und einer Gegenfeder beinhalten, die das Metallelement 20 gegen das Metallbauteil 22 drückt.

Ein derartiges Schweißsystem 10 ist dem Grunde nach aus dem Stand der Technik bekannt und ist näher in der eingangs genannten Broschüre "Neue TUCKER Technologie. Bolzenschweißen mit System!" beschrieben, deren Offenbarungsgehalt vorliegend vollständig durch Bezugnahme enthalten sein soll.

Generell verläuft ein Schweißvorgang mit dem Schweißsystem 10 wie folgt. Zunächst wird das Element 12 auf das Bauteil 14 aufgesetzt, so, daß ein elektrischer Kontakt entsteht. Anschließend wird ein sogenannter Vorstrom eingeschaltet. Kurz hiernach wird das Element bzw. Metallelement 20 gegenüber dem Bauteil bzw. Metallbauteil 22 angehoben, bis eine Schweißhubhöhe erreicht ist. Während dieser Zeit bleibt der Vorstrom eingeschaltet. Es wird während des Abhebens des Bauteils ein Lichtbogen gezogen. Der Vorstrom-Lichtbogen hat hinreichend Energie, um im Bereich der Schweißstelle vorhandene Verunreinigungen, Oberflächenbeschichtungen, Zink, Trockenschmierstoffe, Öle etc. abzubrennen bzw. zu verdampfen.

Nach dem Erreichen der Schweißhubhöhe wird der Schweißstrom I zugeschaltet. Durch den hohen Schweißstrom I in der Größenordnung von beispielsweise 20 A bis 1500 A werden das Element 20 und das Bauteil 22 im Bereich des gezogenen Lichtbogens angeschmolzen. Der Lichtbogen ist in Fig. 1 schematisch durch eine Mehrzahl von Pfeilen zwischen dem Element 20 und dem Bauteil 22 angedeutet.

Die in den Schweißvorgang einfließende Energie E steigt an. Anschließend wird der Absenkvorgang eingeleitet. Das Element 20 wird mit einer vorbestimmten Geschwindigkeit abgesenkt, bis es auf das Bauteil 22 auftrifft. Zu diesem Zeitpunkt wird der Lichtbogen kurzgeschlossen und der Schweißstrom I wird abgeschaltet. Dabei kann der Absenkvorgang bis leicht unter die Grundfläche des Metallbauteiles 22 erfolgen, um ein sattes Eintauchen des Elements 20 in die angeschmolzene Oberfläche des Bauteiles 22 zu gewährleisten.

Die Schmelzen von Element 20 und Bauteil 22 vereinigen sich und erkalten aufgrund der Unterbrechung des Energieeintrags. Das Element 20 ist somit fest auf das Bauteil 22 geschweißt und kann als Anker zur Befestigung von Teilen an dem Bauteil 22 dienen.

Das Schweißsystem 10 weist zur Überwachung eines Schweißvorganges eine Meßeinrichtung 34 auf, die die zwischen dem Element 20 und dem Bauteil 22 während des Schweißvorganges anliegende elektrische Lichtbogenspannung U mißt.

Die Meßeinrichtung 34 übermittelt die Meßergebnisse über eine Signalleitung 36 an die Auswerteeinrichtung 26 der Steuereinrichtung 23.

Die Auswerteeinrichtung 26 wertet den Verlauf der Lichtbogenspannung U während eines Schweißvorganges aus. Die Ergebnisse der Auswertung werden in einem Speicher der Steuereinrichtung 23 abgespeichert und/oder über die Benutzerschnittstelle 18 angezeigt.

Die Auswerteeinrichtung 26 ist ferner über eine Signalleitung 38 mit der Leistungsversorgungseinrichtung 24 verbunden. Über die Signalleitung 38 kann zumindest während der Vorstromphase die Leistungsversorgungseinrichtung 24 angewiesen werden, einen Schweißvorgang abzubrechen, falls eine Störung mittels der Lichtbogenspannung in Echtzeit erfaßt wird.

Gewöhnlich werden die Messungen der Meßeinrichtung 34 jedoch wie gesagt in der Steuereinrichtung 23 (bzw. der Auswerteeinrichtung 26) gespeichert und nach Abschluß des Schweißvorganges analysiert.

Fig. 2 zeigt eine Diagramm 50 der Lichtbogenspannung U über der Zeit.

Der Verlauf der Lichtbogenspannung U über einen Schweißvorgang ist bei 52 gezeigt. Dabei ist die Lichtbogenspannung zunächst null, dann nämlich, wenn das Metallelement 20 das Metallbauteil 22 unmittelbar kontaktiert.

Mit dem Anheben des Metallelementes 20 gegenüber dem Metallbauteil 22 steigt die Lichtbogenspannung U an, bis ein bestimmtes Niveau erreicht wird. Dieses Niveau wird über einen Schweißabschnitt Tₛ annähernd gehalten und sinkt dann wieder ab. In dem Moment, wo das Metallelement 20 das Metallbauteil 22 wieder kontaktiert, ist die Lichtbogenspannung U wieder null.

Während des Schweißvorganges wird die Lichtbogenspannung U diskret abgetastet, mit einer Abtastperiode T_{P}, die beispielsweise 256 µs betragen kann.

Der gesamte Schweißvorgang kann eine Zeitdauer im Bereich von bspw. 6 bis 200 ms andauern.

Die während eines Schweißvorganges abgetastete Meßkurve 52 der Lichtbogenspannung U kann beispielsweise mit einem festen, vorab eingestellten Schwellenwert verglichen werden (nicht dargestellt). Ferner ist es möglich, einen Mittelwert der Lichtbogenspannung U über der Zeit zu bilden. Dabei ist es möglich, sich auf den Schweißabschnitt T_{S} zu begrenzen.

Anschließend ist eine Analyse anhand eines Vergleiches der Meßkurve 52 mit dem Mittelwert möglich.

Erfindungsgemäß wird die Meßkurve 52 jedoch zunächst geglättet, beispielsweise durch eine Tiefpaß-Filterung. Die geglättete Meßkurve ist in Fig. 2 gestrichelt dargestellt und mit der Bezugsziffer 54 versehen.

Die Tiefpaß-Filterung kann beispielsweise durch digitale Signalverarbeitung auf einem digitalen Signalprozessor der Steuereinrichtung 23 mittels bekannter Algorithmen erfolgen, beispielsweise durch ein FIR-Filter.

Die Grenzfrequenz des Tiefpaß-Filters liegt bei einer Schweißzeit Tₛ von bspw. 100 ms beispielsweise bei 125 Hz. Dies bedeutet näherungsweise, daß die Meßkurve 54 keine Frequenzkomponenten mit einer Frequenz größer als 125 Hz (entsprechend einer Periode von 8 ms) enthält.

Anschließend wird zu der geglätteten Meßkurve 54 eine obere Toleranzkurve 56 und eine untere Toleranzkurve 58 berechnet. Die obere Toleranzkurve 56 hat zeitlich durchgehend einen konstanten Abstand 60 von der geglätteten Meßkurve 54. Genauso hat die untere Toleranzkurve 58 zeitlich durchgehend einen konstanten Abstand 62 von der geglätteten Meßkurve 54.

In der Auswerteeinrichtung 26 wird anschließend die ungeglättete Meßkurve 52 mit sowohl der oberen als auch der unteren Toleranzkurve 56, 58 verglichen.

Es zeigt sich, daß die ungeglättete Meßkurve 54 einen Ausreißer nach oben (Peak) 64 aufweist, der außerhalb der oberen Toleranzkurve 56 liegt. Genauso weist die ungeglättete Meßkurve 52 einen Ausreißer nach unten (Drop) 66 auf, bei dem die Lichtbogenspannung U unter der unteren Toleranzkurve 58 liegt.

Andererseits weist die ungeglättete Meßkurve 52 auch einige andere Überschwinger 68 auf, bei denen die ungeglättete Meßkurve 52 gegenüber der geglätteten Meßkurve 54 abweicht, jedoch jeweils innerhalb der Toleranzkurven 56, 58 verbleibt.

Die Auswerteeinrichtung 26 erkennt folglich den Peak 64 und den Drop 66 als hochfrequente Störungen der Lichtbogenspannung U. Diese Störungen werden in der Steuereinrichtung 23 abgespeichert und/oder über die Benutzerschnittstelle 18 angezeigt. Gegebenenfalls kann ein Alarm ausgelöst werden, daß der mit hochfrequenten Störungen überlagerte Schweißvorgang mangelhaft gewesen ist und der Nachbearbeitung oder Neubearbeitung bedarf.

Andererseits ist es auch möglich, das Auftreten derartiger hochfrequenter Störungen durch Inkrementieren eines Fehlerzählers zu dokumentieren, und lediglich bei Überschreiten einer bestimmten Schwelle des Fehlerzählers einen Alarm abzugeben.

Fig. 3 zeigt ein der Fig. 2 entsprechendes Diagramm von Lichtbogenspannung U über der Zeit t. Sämtliche obigen Erläuterungen beziehen sich folglich auch auf die Ausführungsform der Fig. 3.

Bei dieser Ausführungsform wird neben der oberen Toleranzkurve 56 eine Zwischentoleranzkurve 70 berechnet. Die Zwischentoleranzkurve 70 weist gegenüber der geglätteten Meßkurve 54 durchgehend einen konstanten Abstand 72 auf, der kleiner ist als der Abstand 60, bspw. halb so groß..

Nach einem Schweißvorgang wird die ungeglättete Meßkurve 52 einerseits mit der oberen und der unteren Toleranzkurve 56, 58 verglichen. Es wird bestimmt, daß eine starke hochfrequente Störung vorliegt, wenn eine dieser beiden Toleranzkurven 56, 58 überschritten wird, wie es bei dem Peak 64 und dem Drop 66 der Fall ist. Im Falle des Auftretens einer solchen starken hochfrequenten Störung wird bei dieser Ausführungsform in jedem Fall ein Alarmsignal abgegeben, das über die Benutzerschnittstelle 18 anzeigt, daß der Schweißvorgang mangelhaft war und einer Nachbearbeitung bedarf.

Falls hingegen hochfrequente Störungen auftreten, die zwar innerhalb der Toleranzkurven 56, 58 bleiben, jedoch die Zwischentoleranzkurve 70 überschreiten, wie es in Fig. 3 bei 74 gezeigt ist, wertet die Auswerteeinrichtung 26 dies als weniger starke hochfrequente Störung. Die Auswerteeinrichtung 26 gibt folglich kein Alarmsignal ab, sondern lediglich ein Warnsignal. Das Warnsignal kann dazu verwendet werden, beispielsweise einen Fehlerzähler zu inkrementieren.

Bei einer Häufung des Auftretens derartiger Warnungen wegen weniger starker hochfrequenter Störungen läßt sich eine Tendenz ableiten, daß das Schweißsystem 10 gewartet werden muß, oder sonstige Randbedingungen sich geändert haben, die den Schweißvorgang dauerhaft negativ beeinflussen.

Ein Peak wie der oben gezeigte Peak 64 kann insbesondere dann auftreten, wenn im Laufe eines Schweißvorganges aus irgendwelchen Gründen ein Schutzgasmantel um den Lichtbogen herum gestört wird. Dies hat zur Folge, daß Sauerstoff dem Lichtbogen zugeführt wird. Der elektrische Widerstand und folglich die Lichtbogenspannung U steigen an.

Entsprechend kann ein Drop wie der obige Drop 66 hervorgerufen werden durch ein Abtropfen von dünnflüssiger Schmelze entweder des Metallelementes 20 oder des Metallbauteiles 22 (je nach Relativlage). Ein solches kurzzeitiges Abtropfen hat eine Verringerung des elektrischen Widerstandes zur Folge und folglich eine Verringerung der Lichtbogenspannung U.

Es hat sich gezeigt, daß die Frequenz der hierdurch hervorgerufenen Störungen im Bereich von > 250 Hz liegt. Derartige Störungen können mit herkömmlichen Überwachungsverfahren nicht ermittelt werden, insbesondere dann nicht, wenn die Lichtbogenspannung geregelt wird, beispielsweise durch Verändern der Hubhöhe H.

Ferner ist festzustellen, daß die oben genannten Störungen insbesondere dann auftreten können, wenn Aluminiumbolzen oder sonstige -elemente auf Aluminium geschweißt werden.

Fig. 4 zeigt ein Diagramm der in die Schweißverbindung eingetragenen Energie E über der Zeit t.

Der Wert von E wird ermittelt durch Integrieren der Lichtbogenspannung U über der Zeit.

Folglich steigt der Wert von E kontinuierlich, jedoch mit variabler Steigung, bis zum Ende des Schweißvorganges an. Die entsprechende Kurve ist in Fig. 4 bei 80 dargestellt.

Am Ende des Schweißvorganges ist folglich ein Endwert der Energie E erreicht, der in Fig. 4 mit 86 bezeichnet ist.

In Fig. 4 sind ferner ein oberer Schwellenwert 82 und ein unterer Schwellenwert 84 für den Endwert der Energie E eingezeichnet. Der obere und der untere Schwellenwert 82, 84 werden vorab eingegeben. Diese Werte werden aus der Erfahrung heraus berechnet. Falls der Endwert 86 der Energie E den unteren Schwellenwert 84 unterschreitet, ist der Energieeintrag E in die Schweißverbindung zu gering, als daß das Element 20 dauerhaft als Träger verwendet werden kann. Umgekehrt ist bei einem Überschreiten des oberen Schwellenwertes 82 durch den Endwert 86 davon auszugehen, daß der Energieeintrag E zu hoch war. Folglich besteht die Gefahr, daß Bereiche in der Nachbarschaft der Schweißverbindung in Mitleidenschaft gezogen worden sind und/oder unerwünschte Verformungen an Element 20 oder Bauteil 22 aufgetreten sind.

Wenn der Endwert 86 hingegen zwischen oberem und unterem Schwellenwert 82, 84 liegt, bewertet die Auswerteeinrichtung 26 den Schweißvorgang hinsichtlich des erfolgten Energieeintrages als gut.

Es versteht sich, daß das Integrieren der Lichtbogenspannung U zur Ermittlung des Energieeintrags E ebenfalls auf digitalem Wege mittels eines digitalen Signalprozessors erfolgen kann.

## Patentansprüche

1. Verfahren zum Kurzzeit-Lichtbogenschweißen, insbesondere zum Bolzenschweißen, mit dem Schritt, einen Schweißparameter, insbesondere die Lichtbogenspannung (U) während wenigstens eines zeitlichen Abschnittes (Tₛ) des Schweißvorganges abzutasten, um Störungen (64, 66) zu erkennen, **dadurch gekennzeichnet, daß** die aus dem Abtastvorgang ermittelte Meßkurve (52) geglättet und anschließend wenigstens eine Toleranzkurve (56, 58; 56, 58, 70) erzeugt wird, die einen vorab einstellbaren Abstand (60; 62; 72) von der geglätteten Meßkurve (54) aufweist, und daß anschließend die ungeglättete Meßkurve (52) mit der Toleranzkurve (56, 58; 56, 58, 70) verglichen wird, um hochfrequente Störungen (64, 66) zu erkennen.

2. Verfahren nach Anspruch 1, **dadurch gekennzeichnet, daß** die Toleranzkurve (56; 56, 70) oberhalb der geglätteten Meßkurve (54) angeordnet wird, um hochfrequente Störungen (64) zu erkennen, die gegenüber der geglätteten Meßkurve (54) nach oben hin ausreißen.

3. Verfahren nach Anspruch 1 oder 2, **dadurch gekennzeichnet, daß** die Toleranzkurve (58) unterhalb der geglätteten Meßkurve (54) angeordnet ist, um hochfrequente Störungen (66) zu erkennen, die gegenüber der geglätteten Meßkurve (54) nach unten hin ausreißen.

4. Verfahren nach einem der Ansprüche 1 bis 3, **dadurch gekennzeichnet, daß** der Abstand (60; 62; 72) zwischen Toleranzkurve (56, 58; 56, 58, 70) und geglätteter Meßkurve (54) über den Abtastabschnitt (Tₛ) konstant ist.

5. Verfahren nach einem der Ansprüche 1 bis 4, **dadurch gekennzeichnet, daß** nach dem Glätten der Meßkurve (52) wenigstens zwei Toleranzkurven (56, 70) erzeugt werden, die in der selben Richtung zwei unterschiedliche Abstände (60, 72) gegenüber der geglätteten Meßkurve (54) aufweisen, und daß anschließend die ungeglättete Meßkurve (52) mit den zwei Toleranzkurven (56, 70) verglichen wird, um weniger starke (74) und starke (64) hochfrequente Störungen zu erkennen.

6. Verfahren nach einem der Ansprüche 1 bis 5, **dadurch gekennzeichnet, daß** der Schweißparameter (U) diskret abgetastet wird.

7. Verfahren nach Anspruch 6, **dadurch gekennzeichnet, daß** die Glättung der Meßkurve (52) durch eine digitale Tiefpaß-Filterung der aus diskreten Meßpunkten bestehenden Meßkurve (52) erfolgt.

8. Verfahren nach Anspruch 6 oder 7, **dadurch gekennzeichnet, daß** die Abtastperiode (Tₚ) im Bereich zwischen 100 µs und 1000 µs, insbesondere im Bereich zwischen 200 µs und 500 µs liegt.

9. Verfahren nach Anspruch 7 oder 8, **dadurch gekennzeichnet, daß** die Tiefpaß-Filterung mit einer Grenzfrequenz im Bereich zwischen 20 Hz und 400 Hz, insbesondere im Bereich zwischen 50 Hz und 250 Hz erfolgt.

10. Verfahren nach einem der Ansprüche 1 bis 9, **dadurch gekennzeichnet, daß** die Häufigkeit des Auftretens von hochfrequenten Störungen (64, 66; 74) erfaßt wird.

11. Verfahren nach einem der Ansprüche 1 bis 10, **dadurch gekennzeichnet, daß** der zur Erzeugung des Lichtbogens verwendete elektrische Strom (I) während des Abtastabschnittes (Tₛ) auf einen konstanten Wert geregelt wird und daß die Lichtbogenspannung (U) über die Zeit aufintegriert wird, um ein Maß (86) für die Energie (E) zu erhalten, die in die Schweißverbindung eingetragen wird.

12. Verfahren nach Anspruch 11, **dadurch gekennzeichnet, daß** das durch Integrieren der Lichtbogenspannung (U) ermittelte Energiemaß (86) mit einem oberen und einem unteren Schwellenwert (82, 84) verglichen wird, um die Qualität der Schweißverbindung abzuschätzen.

13. Kurzzeit-Lichtbogenschweißsystem (10) zum Schweißen von Elementen (20), wie z.B. Metallbolzen (22), auf Bauteile (22), wie z.B. Metallbleche (22), mit
- einer Schweißkopfeinrichtung (16), die ein Element (20) im Rahmen eines Schweißvorganges gegenüber dem Bauteil (22) anhebt und wieder absenkt,
- einer Leistungsversorgungseinrichtung (24), die Leistung zum Bilden eines Lichtbogens zwischen dem Bauteil (22) und dem angehobenen Element (20) bereitstellt,
- einer Meßeinrichtung (34), die wenigstens einen Schweißparameter (U), insbesondere die Lichtbogenspannung (U), während wenigstens eines zeitlichen Abschnittes (Tₛ) des Schweißvorganges abtastet, und
- einer Auswerteeinrichtung (26), der die abgetasteten Meßwerte des Schweißparameters (U) zugeführt werden, um Störungen (64, 66) zu erkennen,
**dadurch gekennzeichnet, daß**
die Auswerteeinrichtung (26) dazu ausgelegt ist, eine aus den abgetasteten Meßwerten des Schweißparameters (U) ermittelte Meßkurve (52) zu glätten und anschließend wenigstens eine Toleranzkurve (56, 58; 56, 58, 70) zu erzeugen, die einen vorab einstellbaren Abstand (60; 62; 72) von der geglätteten Meßkurve (54) aufweist, und dazu, die ungeglättete Meßkurve (52) anschließend mit der Toleranzkurve 56, 58; 56, 58, 70) zu vergleichen, um hochfrequente Störungen (64, 66) zu erkennen.

14. System nach Anspruch 13, **dadurch gekennzeichnet, daß** die Leistungsversorgungseinrichtung (24) eine Konstantstromquelle (24) ist.

## Claims

1. Process for short-time arc welding, in particular for stud welding, with the step of sampling a welding parameter, in particular the arc voltage (U), during at least one time segment (Tₛ) of the welding operation, in order to detect disturbances (64, 66), **characterised in that** the measurement curve (52) determined from the sampling operation is smoothed and subsequently at least one tolerance curve (56, 58; 56, 58, 70) is generated which lies at a previously adjustable distance (60; 62; 72) from the smoothed measurement curve (54), and that subsequently the unsmoothed measurement curve (52) is compared with the tolerance curve (56, 58; 56, 58, 70) in order to detect high-frequency disturbances (64, 66).

2. Process according to claim 1, **characterised in that** the tolerance curve (56; 56, 70) is arranged above the smoothed measurement curve (54) in order to detect high-frequency disturbances (64) which protrude upwards in relation to the smoothed measurement curve (54).

3. Process according to claim 1 or 2, **characterised in that** the tolerance curve (58) is arranged below the smoothed measurement curve (54) in order to detect high-frequency disturbances (66) which protrude downwards in relation to the smoothed measurement curve (54).

4. Process according to any of claims 1 to 3, **characterised in that** the distance (60; 62; 72) between the tolerance curve (56, 58; 56, 58, 70) and the smoothed measurement curve (54) is constant across the sampling segment (Tₛ).

5. Process according to any of claims 1 to 4, **characterised in that** after the smoothing of the measurement curve (52) at least two tolerance curves (56, 70) are generated which have in the same direction two different distances (60, 72) in relation to the smoothed measurement curve (54), and **in that** subsequently the unsmoothed measurement curve (52) is compared with the two tolerance curves (56, 70) in order to detect less strong (74) and strong (64) high-frequency disturbances.

6. Process according to any of claims 1 to 5, **characterised in that** the welding parameter (U) is sampled discretely.

7. Process according to claim 6, **characterised in that** the measurement curve (52) is smoothed by means of digital low-pass filtering of the measurement curve (52) consisting of discrete measuring points.

8. Process according to claim 6 or 7, **characterised in that** the sampling period (Tₚ) is in the region of between 100 µs and 1000 µs, in particular in the region between 200 µs and 500 µs.

9. Process according to claim 7 or 8, **characterised in that** the low-pass filtering takes place with a limit frequency in the region of between 20 Hz and 400 Hz, in particular in the region of between 50 Hz and 250 Hz.

10. Process according to any of claims 1 to 9, **characterised in that** the frequency of occurrence of high-frequency disturbances (64, 66; 74) is detected.

11. Process according to any of claims 1 to 10, **characterised in that** the electrical current (I) used to generate the arc is regulated to a constant value during the sampling segment (Tₛ) and that the arc voltage (U) over time is integrated in order to obtain a measure (86) for the energy (E) applied to the weld joint.

12. Process according to claim 11, **characterised in that** the energy measure (86) determined by means of integration of the arc voltage (U) is compared with an upper and a lower threshold value (82, 84) in order to estimate the quality of the weld joint.

13. Short-time arc welding system (10) for welding elements (20), such as for example metal studs (20), on to components (22), such as for example metal sheets (22), with a welding head device (16) which raises an element (20) in the context of a welding operation in relation to the component (22) and lowers said element again, a power supply device (24) which provides power for forming an arc between the component (22) and the raised element (20),
- a measuring device (34) which samples at least one welding parameter (U), in particular the arc voltage (U), during at least one time segment (Tₛ) of the welding operation, and
- an analysis device (26) to which are fed the sampled measurement values of the welding parameter (U) in order to detect disturbances,
**characterised in that** the analysis device (26) is designed to smooth a measurement curve (52) determined from the sampled measurements of the welding parameter (U) and subsequently to generate at least one tolerance curve (56, 58; 56, 58, 70) which has a previously adjustable distance (60; 62; 72) from the smoothed measurement curve (54), and, in addition, subsequently to compare the unsmoothed measurement curve (52) with the tolerance curve (56, 58; 56, 58, 70) in order to detect high-frequency disturbances (64, 66).

14. System according to claim 13, **characterised in that** the power supply device (24) is a constant-current source (24).

## Revendications

1. Procédé de soudage à l'arc de courte durée, en particulier de soudage à l'arc avec percussion, comprenant l'étape consistant à analyser un paramètre de soudage, en particulier la tension de l'arc électrique (U) pendant au moins un intervalle (T_{S}) du processus de soudage, afin de détecter des défauts (64, 66), **caractérisé en ce que** la courbe de mesure (52) déterminée à partir du processus d'analyse est lissée et ensuite, au moins une courbe de tolérance (56, 58 ; 56, 58, 70) est générée, qui comprend un écart (60 ; 62 ; 72) pouvant être réglé à l'avance par rapport à la courbe de mesure lissée (54), et **en ce que** la courbe de mesure non lissée (52) est comparée à la courbe de tolérance (56, 58 ; 56, 58, 70), afin de détecter des défauts de haute fréquence (64, 66).

2. Procédé selon la revendication 1, **caractérisé en ce que** la courbe de tolérance (56 ; 56, 70) est disposée au-dessus de la courbe de mesure lissée (54), afin de détecter des défauts de haute fréquence (64) qui se dirigent vers le haut par rapport à la courbe de mesure lissée (54).

3. Procédé selon la revendication 1 ou 2, **caractérisé en ce que** la courbe de tolérance (58) est disposée au-dessous de la courbe de mesure lissée (54), afin de détecter des défauts de haute fréquence (66) qui se dirigent vers le bas par rapport à la courbe de mesure lissée (54).

4. Procédé selon l'une des revendications 1 à 3, **caractérisé en ce que** l'écart (60 ; 62 ; 72) entre la courbe de tolérance (56, 58 ; 56, 58, 70) et la courbe de mesure lissée (54) est constant sur l'intervalle d'analyse (T_{S}).

5. Procédé selon l'une des revendications 1 à 4, **caractérisé en ce qu'**après le lissage de la courbe de mesure (52), au moins deux courbes de tolérance (56, 70) sont générées, qui comprennent dans la même direction deux écarts différents (60, 72) par rapport à la courbe de mesure lissée (54), et **en ce que** par la suite, la courbe de mesure non lissée (52) est comparée aux deux courbes de tolérance (56, 70), afin de détecter des défauts de haute fréquence moins forts (74) et forts (64).

6. Procédé selon l'une des revendications 1 à 5, **caractérisé en ce que** le paramètre de soudage (U) est analysé de façon discrète.

7. Procédé selon la revendication 6, **caractérisé en ce que** le lissage de la courbe de mesure (52) s'effectue par un filtrage passe-bas numérique de la courbe de mesure (52) constituée de points de mesure discrets.

8. Procédé selon la revendication 6 ou 7, **caractérisé en ce que** la période d'analyse (T_{P}) se situe dans la plage comprise entre 100 µs et 1000 µs, en particulier dans la plage comprise entre 200 µs et 500 µs.

9. Procédé selon la revendication 7 ou 8, **caractérisé en ce que** le filtrage passe-bas s'effectue avec une fréquence moyenne dans la plage comprise entre 20 Hz et 400 Hz, en particulier dans la plage comprise entre 50 Hz et 250 Hz.

10. Procédé selon l'une des revendications 1 à 9, **caractérisé en ce que** la fréquence de l'apparition de défauts de haute fréquence (64, 66 ; 74) est captée.

11. Procédé selon l'une des revendications 1 à 10, **caractérisé en ce que** le courant électrique (I) utilisé pour générer l'arc électrique est réglé, pendant l'intervalle d'analyse (T_{S}), à une valeur constante, et **en ce que** la tension de l'arc (U) est intégrée pendant un certain temps, afin d'obtenir une mesure (86) pour l'énergie (E) qui alimente l'assemblage par soudage.

12. Procédé selon la revendication 11, **caractérisé en ce que** la masse d'énergie (86) déterminée par l'intégration de la tension de l'arc (U) est comparée à des seuils différentiels supérieur et inférieur (82, 84), afin d'évaluer la qualité de l'assemblage par soudage.

13. Système de soudage à l'arc de courte durée (10) destiné à souder des éléments (20), comme par exemple des boulons en métal (22), à des composants (22), comme par exemple des tôles métalliques (22), comprenant
- un dispositif de tête de soudage (16) qui soulève et abaisse à nouveau un élément (20) par rapport au composant (22) dans le cadre d'un processus de soudage,
- un dispositif d'alimentation en puissance (24) qui met à disposition la puissance destinée à former un arc électrique entre le composant (22) et l'élément soulevé (20),
- un dispositif de mesure (34) qui analyse au moins un paramètre de soudage (U), en particulier la tension de l'arc (U), pendant au moins un intervalle (Tₛ) du processus de soudage,
- un dispositif d'évaluation (26), auquel sont amenées les valeurs de mesure analysées du paramètre de soudage (U), afin de détecter les défauts (64, 66),
**caractérisé en ce que**
le dispositif d'évaluation (26) est dimensionné de manière à lisser une courbe de mesure (52) déterminée à partir des valeurs de mesure analysées du paramètre de soudage (U) et ensuite à générer au moins une courbe de tolérance (56, 58 ; 56, 58, 70) qui comprend un écart (60 ; 62 ; 72) pouvant être réglé par rapport à la courbe de mesure lissée (54), et à cet effet, à comparer ensuite la courbe de mesure non lissée (52) à la courbe de tolérance (56, 58 ; 56, 58, 70), afin de détecter des défauts de haute fréquence (64, 66).

14. Système selon la revendication 13, **caractérisé en ce que** le dispositif d'alimentation en puissance (24) est une source de courant constante (24).
